# EUROPEAN PATENT SPECIFICATION

(11) **EP 2 437 478 B1**
(45) Date of publication and mention of the grant of the patent: **24.10.2012**
(21) Application number: 10182193.2
(22) Date of filing: 29.09.2010
(51) Int. Cl.: H04M 3/42, H04W 4/20

(54) **Supplemental information for mobile terminated mobile initiated calling**
Ergänzende Information für ein von einem mobilen Endgerät mobil ausgelöstem Anruf
Information supplémentaire pour appels initiés et terminés par un mobile

(43) Date of publication of application: 04.04.2012
(73) Proprietor: Research In Motion Limited, Waterloo, ON N2L 3W8 (CA)
(72) Inventor: Ierullo, Salvatore, Mississauga Ontario L4W 5P1 (CA); Spencer, Bradford Lawrence, Bedford Nova Scotia B4B 0G4 (CA); George, Richard John, Waterloo Ontario N2L 3X2 (CA)
(74) Representative: Fennell, Gareth Charles

(56) References cited:
- EP-A2- 1 032 224
- US-A1- 2005 243 982

## Description

### BACKGROUND

### Field:

The present application relates to mobile device communications, such as voice and data communication, and more particularly to calls involving a PBX.

### Related art:

Mobile devices are used for voice and data communications. Increasingly, mobile devices can be used in a business environment, and it can be desirable to involve telephony systems typically associated with business environments, such as Private Branch Exchanges (PBXs) in mobile telephony. Further advancements in these areas remain desirable.

[0002a] EP 1 032 224 A2 describes a method and apparatus for providing a quasi mobile telephone service. US 2005/0243982 A1 describes an integrated telephone call and context notification system which is a mechanism for placing a telephone call while at the same time communicating context (e.g., subject, importance and/or nature) of the telephone call.

### BRIEF DESCRIPTION OF THE DRAWINGS

Reference will now be made, by way of example, to the accompanying drawings which show example embodiments of the present application, and in which:

Figure 1 depicts a diagram of a network involving a PBX, a call control server, and a mobile device, among other elements depicted to provide context;

Figure 2 depicts example of components of an example mobile device;

Figure 3 depicts an example view of an example mobile device, and some of the user interface componentry thereof;

Figure 4 depicts a signal ladder of example signals that can be exchanged in setting up a voice channel, and a time frame in which supplemental information can be sent, displayed or sent and displayed;

Figure 5 depicts example sources of supplemental information that can be displayed at a mobile device;

Figure 6 depicts an example method that can be performed at a mobile device according to this disclosure; and

Figure 7 depicts an example method that can be performed at a server communicating with a mobile device, according to this disclosure.

### DESCRIPTION

It would be advantageous to provide enterprise telephony services and other enhanced services to mobile devices. In some situations and call scenarios, a mobile device can be notified of a call available at a PBX 4 to be directed to the mobile device. In some networks and with some devices, this notification can be sent on a data channel, such that no audio channel has yet been established. The establishment of the audio channel can be started, for example, from the PBX or from the mobile device. Since mobile devices are often tariffed starting from when an audio channel is established, starting to setup an audio channel from the mobile device, before a user has indicated that it will accept the call can incur charges, even though the user ultimately does not accept the call.

However, a time incurred by waiting for a user to accept the call before establishing a voice channel causes a time delay between when the user indicated acceptance of the call to a time when the audio channel actually is available. Such a time delay can cause the user to believe that the call has failed to setup. Also, in general, the user experience is negatively impacted waiting for the call to be setup. Where a data channel exists to the mobile device, such as between the mobile device and a server, such as a third party call control server, the server can provide information over the data channel to the mobile device, which the mobile device can output, such as aurally, visually or by both audio and visual output means. Such information can be related to the incoming call, such as more information about the identity of a person originating the call. If the call originates from an enterprise number, then enterprise information systems may be accessible to provide that information to the mobile device.

By presenting such information between a time when the call has been accepted through the user interface and when the audio (voice) channel is ready to handle traffic, the user experience is improved.

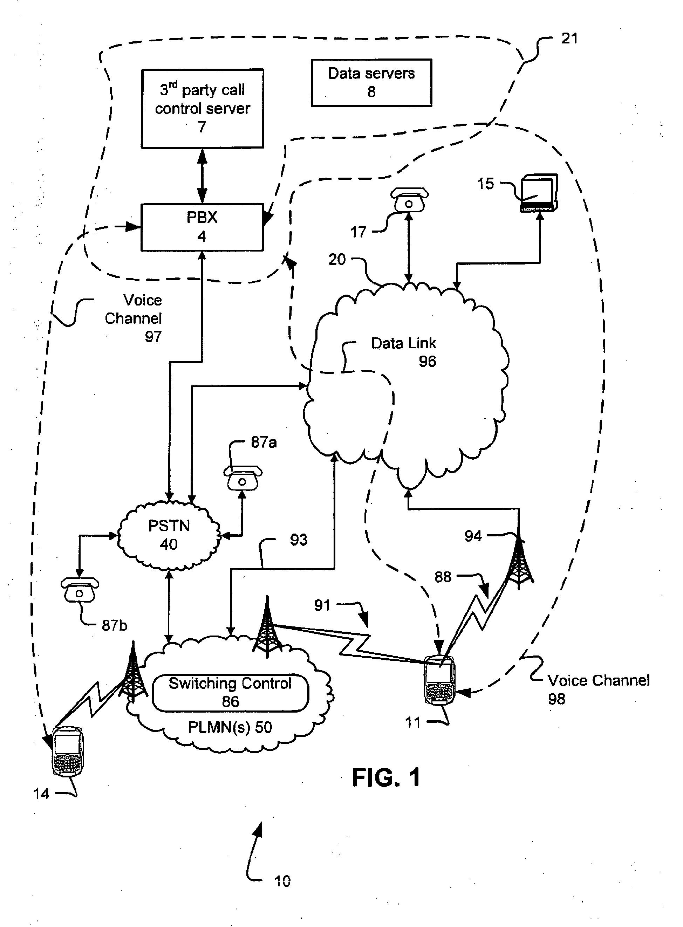

Reference is now made to Figure 1, which shows, in block diagram form, an example system arrangement 10, for explaining aspects according to this disclosure in more detail. Figure 1 depicts that arrangement 10 includes a network 20, which can be comprised of one or more internets and other networks, and can include, for example, a corporate intranet, as well as components of public networks, such as components of the Internet. Figure 1 depicts that communication devices, such as a telephone 17 and a computer 15 can be coupled to communicate using network 20. PSTN 40 also is depicted as being in communication with network 20. Two PSTN telephones 87a and 87b are depicted as being reachable over the PSTN. A Public Land Mobile Network (PLMN) 50 also is depicted, and includes a switching control 86. PLMN 50 can be coupled to PSTN 40, and to network 20, through a data communication, path 93. Data communication path 93 can include one or more packet networks, or linkages between packet networks. Separate identification of network 20 and path 93 is at least partially a matter of convenience, in that path 93 also, in many circumstances, can be considered part of network 20.

PSTN 40 operates over circuit-switched lines. Communication path 93, and network 20 can include a wide variety of digital communication technologies, including packet switching technologies and protocols. For example, Internet Protocol (IP) addressing, and Session Initiation Protocol (SIP) can be used for establishing and conducting voice communications carried over path 93 and network 20.

A mobile device 11 is depicted as communicating with PLMN 50 using cellular communication 91. Cellular communication 91 can itself be implemented using a wide variety of technologies, and can also include voice and data network components (e.g., a voice channel and a data channel time, frequency, or code division multiplexed, according to any of a variety of implemented or proposed cellular communication approaches). Mobile device 11 also can communicate using wireless Local Area Network (LAN) technologies 88, such as those according to the IEEE 802.11 series of standards and proposals. Communication using such WLAN technologies 88 can occur between mobile device 11 and a base station 94, which in turn is coupled with network 20.

Figure 1 also depicts that a voice channel 98 can be established between mobile device 11 and a Private Branch Exchange (PBX) 4, and a voice channel 97 between another device (e.g., a mobile device 14) and PBX 4. In one example, mobile device 14 is attempting to call mobile device 11, and the PBX 4 may establish voice channel 98 in order to complete the call. In other examples, mobile device 11 can request that PBX 4 establish a voice channel to it, and to another entity, such as mobile device 14, or landline phones 87a or 87b.

A data channel 96 can be provided between third party call control server 7 and mobile device 11. Information can be signaled across data channel 96 for exchanging setup and progress information for voice calls that can be carried over a variety of media, such as portions of the PSTN 40, PLMN 50, and portions of network 20. For example, mobile device 11 can signal to third.party call control server 7 to call mobile device 11, to establish a voice channel.

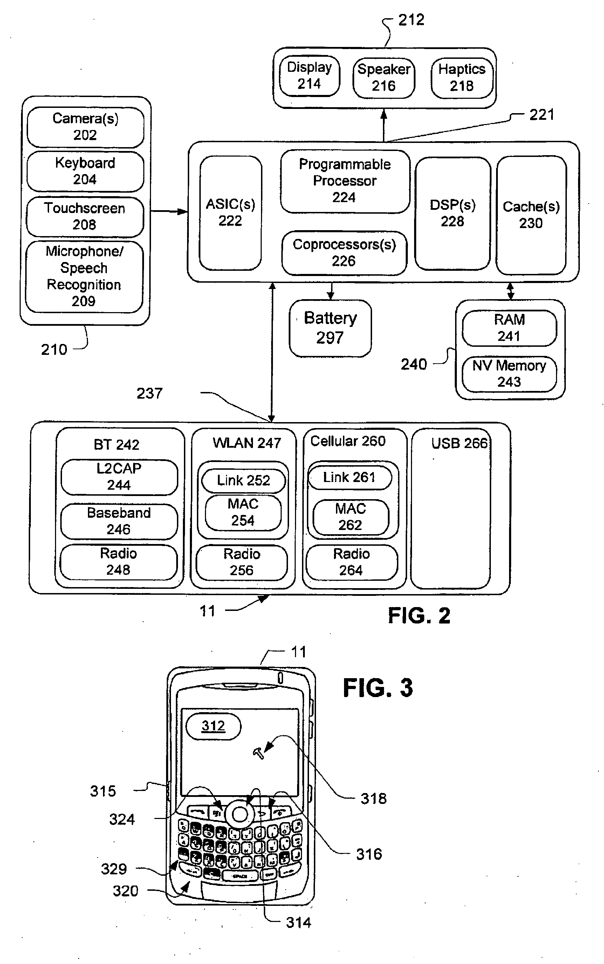

Figure 2 depicts example components that can be used in implementing mobile device 11 according to the above description. Figure 2 depicts that a processing module 221 may be composed of a plurality of different processing elements, including one or more ASICs.222, a programmable processor 224, one or more co-processors 226, which each can be fixed function,; reconfigurable or programmable, and one or more digital signal processors 228. For example, ASIC or co-processor 222 may be provided for implementing graphics functionality, encryption and decryption, audio filtering, and other such functions that often involve many repetitive, math-intensive steps. Processing module 221 can comprise memory to be used during processing, such as one or more cache memories 230.

Processing module 221 communicates with mass storage 240, which can be composed of a Random Access Memory 241, and of non-volatile memory 243. Non-volatile memory 243 can be implemented with one or more of Flash memory, PROM, EPROM, and.so on. Non-volatile memory 243 can be implemented as flash memory, ferromagnetic, phase change memory, and other non-volatile memory technologies. Non-volatile memory 243 also can store programs, device state, various user information, one or more operating systems, device configuration data, and other data that may need to be accessed persistently. A battery 297 can power device 11 occasionally, or in some cases, it can be a sole source of power. Battery 297 may be rechargeable.

User input interface 210 can comprise a plurality of different sources of user input, such as a camera 202, a keyboard 204, a touchscreen 208, and a microphone, which can provide input to speech recognition functionality 209. Output mechanisms 212 can include a display 214, a speaker 216 and haptics 218, for example. These output mechanisms 212 can be used to provide a variety of outputs that can be sensed by a human, in response to information provided from processing module 221.

Processing module 221 also can use a variety of network communication protocols, grouped for description purposes here into a communication module 237, which can include a Bluetooth communication stack 242, which comprises a L2CAP layer 244, a baseband 246 and a radio 248. Communications module 237 also can comprise a Wireless Local Area Network (247) interface, which comprises a link layer 252 with a MAC 254, and a radio 256; Communications module 237 also can comprise a cellular broadband data network interface 260, which in turn comprises a link layer 261, with a MAC 262. Cellular interface 260 also can comprise a radio 264 for an appropriate frequency spectrum. Communications module 237 also can comprise a USB interface 266, to provide wired data communication capability. Other wireless and wired communication technologies also can be provided, and this description is exemplary.

Referring to Figure 3, there is depicted an example of mobile device 11. Mobile device 11 comprises a display 312 and a cursor or view positioning device, here depicted as a trackball 314, which may serve as another input member and is both rotational to provide selection inputs and can also be pressed in a direction generally toward housing to provide another selection input. Trackball 314 permits multi-directional positioning of a selection cursor 318, such that the selection cursor 318 can be moved in an upward direction, in a downward direction and, if desired and/or permitted, in any diagonal direction. The trackball 314 is, in this example, situated on a front face (not separately numbered) of a housing 320, to enable a user to maneuver the trackball 314 while holding mobile device 11 in one hand. In other embodiments, a trackpad or other navigational control device can be implemented as well.

The mobile device 11 in Figure 3 also comprises a programmable convenience button 315 to activate a selected application such as, for example, a calendar or calculator. Further, mobile device 11 can include an escape or cancel button 316, a menu or option button 324 and a keyboard 329. Menu or option button 324 loads a menu or list of options on display 312 when pressed. In this example, the escape or cancel button 316, menu option button 324, and keyboard 329 are disposed on the front face of the mobile device housing, while the convenience button 315 is disposed at the side of the housing. This button placement enables a user to operate these buttons while holding mobile device 11 in one hand. The keyboard 329 is, in this example, a standard QWERTY keyboard.

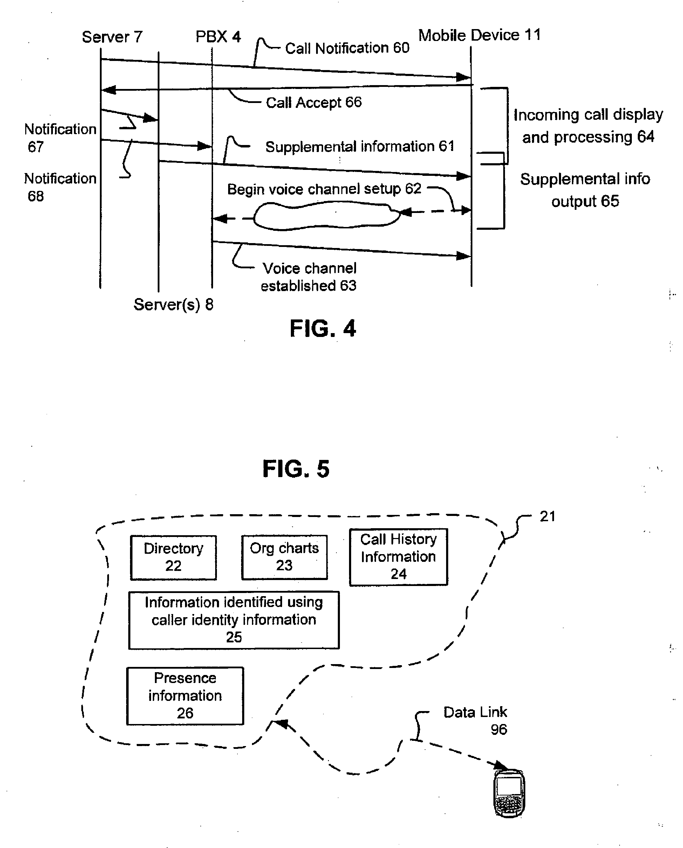

Figure 4 depicts a single ladder in which server 7 sends a call notification 62 to mobile device 11. Call notification 60 can be sent over a data channel, such as data link 96 depicted in Figure 1. Mobile device 11, upon receiving call notification 60, can display a message of the availability of the incoming call, such as on or through a user interface of device 11, and undertake ancillary processing 64, for example.

If a user (or more generally, device 11) accepts the call, a notification 66 of such call acceptance can be transmitted over the data channel for reception by server 7. Responsive to such notification 66, a notification of call acceptance can be sent from server 7 to server 8, which can responsively obtain one or more elements of supplemental information and send such supplemental, information to mobile device 11. One or more servers 8 can serve supplemental information 61 to mobile device 11, which will be displayed by mobile device 11 during a time, while voice channel set up 62 is proceeding. Examples of supplemental information that can be transmitted and displayed are described with respect to figures that follow below. Responsive to receiving an indication through the interface that the call is accepted, mobile device 11 can begin set up of a voice channel 62. In another example, server 7 can signal PBX 4 via a notification 68, to begin setup of voice channel 62 to mobile device 62

The voice channel can carry audio between mobile device 11 and PBX 4.

Ultimately, PBX 4 can acknowledge that the voice channel has been established 63, which indicates that the voice channel is ready to carry audio information for the call, and thus the call can proceed. As such, availability and presentation of supplemental information 61, during a time when mobile device is waiting for the voice channel to be established, allows a better user experience. One way in which the user experience is better is that the user is less likely to be confused about call status, because the presentation of such supplemental information tends to indicate that call setup progress is ongoing. By contrast, in typical circumstances, a user typically expects to be able to talk immediately upon accepting an incoming call. However, such expectation would not be met in these situations, because the mobile phone does not indicate that the voice channel should be established until the call is accepted, and establishing such voice channel takes some time.

Figure 5 depicts examples of information that can be served by servers 8, which are depicted in Figure 4. Examples of information that can be served from one or more servers include directory information 22, which can be served from a directory server. Other organizational information also can be available within an enterprise from one or more servers, such as organizational charts or other information about a structure of an enterprise 23. Information 26 relating to presence information on other communication or messaging system also can be accessed and served. By further example, other information 25 can be identified using identity information of a caller who initiated the call to PBX 4, which is the subject of call notification 60. For example, a search can be done on one or more databases to identify information relevant to the caller. Still further examples of information that can be accessed include call history information, such as call history information from the caller. Collectively these sources of information can include one or more servers identified as servers 8 (FIG. 1 }: However, a variety of physical implementations in storage for such data can be provided. For example, storage can be implemented in network attached storage, which is accessed by one or more processing nodes according to criteria specified. Such information can be served over data link 96, and which is referred to as supplemental information 61 in Figure 4.

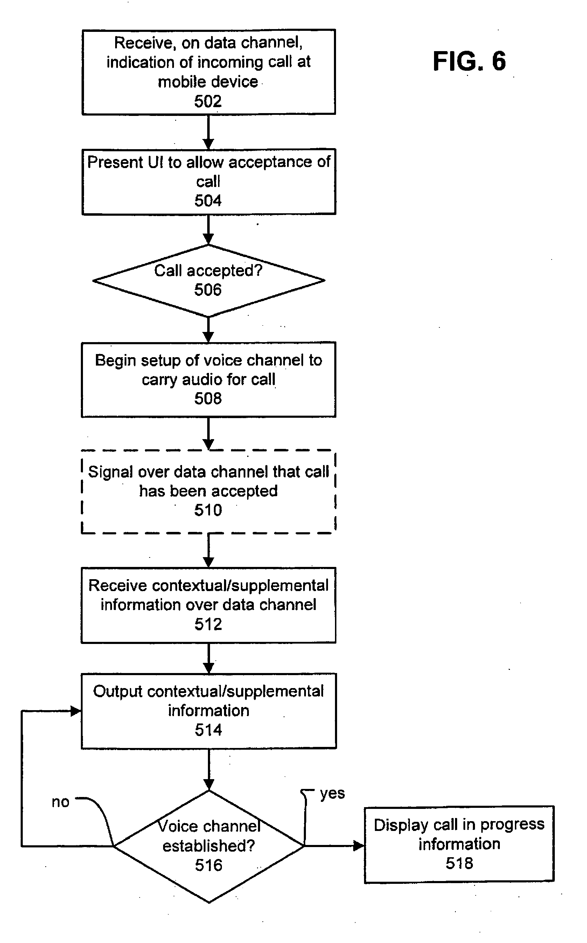

Figure 6 depicts a first example method according to aspects described herein. Mobile device 11 can receive (502) an indication of an incoming call on data channel, such as a data channel 96. Device 11 presents (504) a user interface that allows the call to be accepted, and optionally ignored. The user interface forwards input that was received to a function that determines (506) whether the input is indicative of call acceptance. If the input is indicative of call acceptance, mobile device 11 begins (508) set up of a voice channel (indicates to PLMN 50 or other network resources that the voice channel should be setup) to carry audio for the now accepted call. Mobile device 11 also can signal (510) that the call has been accepted over the data channel, even while the voice channel is being set up starting from mobile device 11 and ultimately to be terminated at PBX 4.

Mobile device 11 receives (512) contextual or supplemental information over data channel 96, as described with respect to Figure 4. Mobile device 11 outputs (514) that received contextual or supplemental information, while the voice channel is being set up. Ultimately a determination can be made that the data channel is established, and responsively, call progress information can be displayed (518). However, if the voice channel is not yet established then further supplemental or contextual information can be displayed or outputted (514) or the same information can be repeatedly displayed.

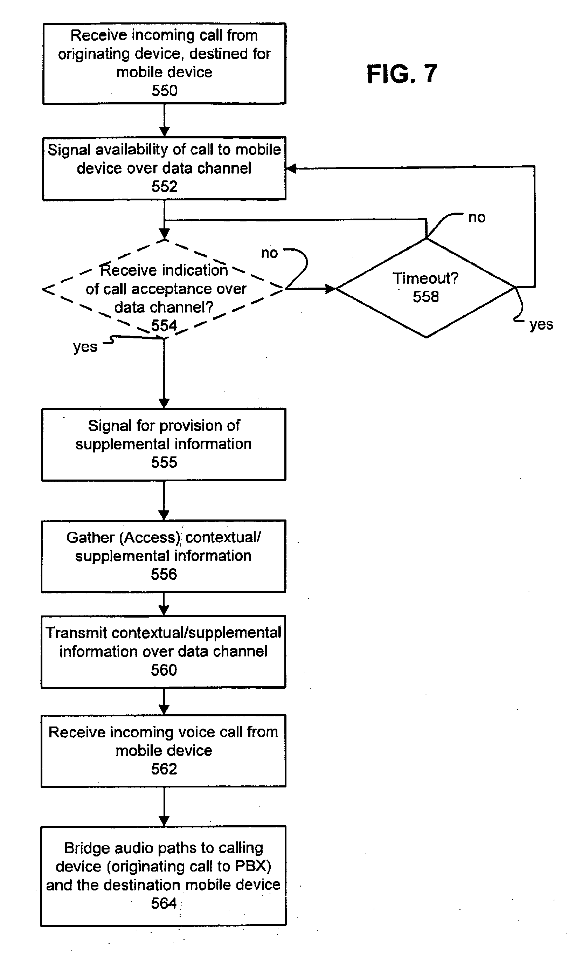

Figure 7 depicts an example method that can be implemented by a server according to aspects described herein. PBX 4 can receive (550) an incoming call from an originating device, which is destined for mobile device 11. Third-party call control server 7 can signal (552) availability of the call to mobile device 11 over data channel 96. Third-party call control server 7 can receive (554) an indication of call acceptance over data channel 96. Responsive to receiving such an indication, third-party call control server 7 can cause other information such as contextual or supplemental information to be gathered or accessed (556), such as by sending (555) a signal to server 8 to gather and/or provide that information to device 11. That contextual or supplemental information can be transmitted (560) over data channel 96 to mobile device 11. Subsequently, an incoming voice call is received from mobile device (562) and the audio path for that incoming voice call can be bridged (564) to an audio path back to the device that originated the call identified in (550), which completes an audio path for the voice call.

Mobile devices are increasingly used for communication, such as voice calling and data exchange. Also, mobile devices increasingly can use a wider variety of networks for such communication. For example, a mobile device can have a broadband cellular radio and a local area wireless network radio. Additionally, the broadband cellular capability of a mobile device may itself support a variety of standards, or protocols that have different communication capabilities, such as GSM, GPRS, EDGE and LTE.

Further, some aspects may be disclosed with respect to only certain examples. However, such disclosures are not to be implied as requiring that such aspects be used only in embodiments according to such examples.

The above description occasionally describes relative timing of events, signals, actions, and the like as occurring "when" another event, signal, action, or the like happens. Such description is not to be construed as requiring a concurrency or any absolute timing, unless otherwise indicated.

Certain adaptations and modifications of the described embodiments can be made. Aspects that can be applied to various embodiments may have been described with respect to only a portion of those embodiments, for sake of clarity. However, it is to be understood that these aspects can be provided in or applied to other embodiments as well. Therefore, the above discussed embodiments are considered to be illustrative and not restrictive.

## Claims

1. A method implemented on a mobile device (11), comprising:
receiving (502), at the mobile device (11), an indication of availability of a voice call on a data channel;
outputting the indication of the availability of the voice call through an interface of the mobile device (11);
receiving (512, 61) at the mobile device (11) supplemental information pertaining to the voice call over the data channel;
receiving (504, 506) input through the interface at the mobile device (11) that the voice call is to be accepted;
beginning (508) to establish a voice channel responsive to acceptance of the voice call; and
during establishing of the voice channel, outputting (514) elements of the supplemental information through the interface at the mobile device (11).

2. The method of clam 1, wherein the receiving of the supplemental information comprises receiving one or more of contact information available from an enterprise directory server (22), and organization information (23) pertaining to an identity of a caller (25).

3. The method of claim 1, wherein beginning to establish the voice channel comprises signaling to network infrastructure equipment one or more commands.

4. The method of claim 1, wherein beginning to establish the voice channel comprises signaling (62) to network infrastructure equipment of a public land mobile network (50).

5. A method, comprising:
indicating (552), from an enterprise network, over a data channel (91, 88) to a mobile device (11) that a voice call, from a calling party, is available for the mobile device (11);
receiving (554) an indication on the data channel (91, 88) that the call is accepted at the mobile device (11);
obtaining (556), at the enterprise network, supplemental information (21) pertaining to the calling party; and
sending (560) responsive to receiving (554) the indication on the data channel that the call is accepted, the supplemental information to the mobile device (11), over the data channel, and for display at mobile device (11), during setup of a voice channel (97) between a Private Branch eXchange PBX (4) and the mobile device (11).

6. The method of claim 5, wherein the obtaining (560) supplemental information comprises obtaining presence information from an enterprise telephony network (26) with which the PBX is coupled.

7. The method of claim 5, wherein the obtaining (560) supplemental information comprises obtaining presence information (26) from enterprise communication platforms comprising one or more of e-mail, and instant messaging servers.

8. The method of claim 5, wherein the obtaining (560) supplemental information comprises obtaining directory information from an enterprise directory server (22).

9. The method of claim 5, wherein the obtaining (560) supplemental information comprises obtaining organization information (23) about a caller associated with the voice call available for the mobile device (11).

10. The method of claim 5, wherein the obtaining (26) supplemental information comprises obtaining caller history information pertaining to calls made by a caller associated with the voice call available for the mobile device (11).

11. The method of claim 5, wherein the obtaining supplemental information comprises obtaining information about an identity of a caller, and searching one or more databases for information pertaining to the caller.

12. A mobile device, comprising:
one or more wireless network interfaces (247, 260) capable of packet data and voice communication;
a memory (241, 243);
a user interface (210); and
a processing resource (221) coupled with the memory, with the one or more wireless network interfaces (247, 260), and with the user interface (210), and
programmed to receive an indication, in packet data, of availability of a voice call for the mobile device at a Private Branch eXchange PBX (4), to responsively output the indication of voice call availability through the interface (210), to receive an indication of acceptance of the voice call through the interface (210), to initiate, responsive to the indication of acceptance, establishment of a voice communication channel and display supplemental information, received in packet data over the one or more wireless network interfaces, during a time when the voice channel is being setup to carry audio for the accepted voice call.

13. The mobile device of claim 12, wherein the supplemental information comprises one or more of contact information available from an enterprise directory server (22), and organization information (23) pertaining to an identity of a caller (25).

14. The mobile device of claim 12, wherein the processing resource further is programmed to initiate establishment of the voice channel by signaling to network infrastructure equipment one or more commands.

## Patentansprüche

1. Verfahren, das in einer mobilen Vorrichtung (11) umgesetzt wird, mit:
Empfangen (502) einer Angabe der Verfügbarkeit eines Sprachanrufs auf einem Datenkanal an der mobilen Vorrichtung (11);
Ausgeben der Angabe der Verfügbarkeit des Sprachanrufs durch eine Schnittstelle der mobilen Vorrichtung (11);
Empfangen (512, 61) von Ergänzungsinformation an der mobilen Vorrichtung (11), die den Sprachanruf über den Datenkanal betrifft;
Empfangen (504, 506) einer Eingabe durch die Schnittstelle an der mobilen Vorrichtung (11), dass der Sprachanruf angenommen werden soll;
Beginn (508) der Herstellung eines Sprachkanals, der auf die Annahme des Sprachanrufs reagiert; und
während der Herstellung des Sprachkanals Ausgeben (514) von Elementen der Ergänzungsinformation durch die Schnittstelle an der mobilen Vorrichtung (11).

2. Verfahren nach Anspruch 1, wobei das Empfangen der Ergänzungsinformation das Empfangen von einer oder mehreren Kontaktinformationen, die von einem Unternehmensverzeichnisserver (22) erhältlich sind, und von Organisationsinformation (23), die die Identität eines Anrufers (25) betrifft, umfasst.

3. Verfahren nach Anspruch 1, wobei der Beginn des Herstellens des Sprachkanals das Signalisieren von einem oder mehreren Befehlen an eine Netzinfrastrukturausrüstung umfasst.

4. Verfahren nach Anspruch 1, wobei der Beginn des Herstellens des Sprachkanals das Signalisieren (62) eines öffentlichen Landfunknetzes (50) an eine Netzinfrastrukturausrüstung umfasst.

5. Verfahren mit:
Angeben (552) von einem Unternehmensnetz über einen Datenkanal (91, 88) an eine mobile Vorrichtung (11), dass ein Sprachanruf von einem anrufenden Teilnehmer für die mobile Vorrichtung (11) verfügbar ist;
Empfangen (554) einer Angabe auf dem Datenkanal (91, 88), dass der Anruf an der mobilen Vorrichtung (11) angenommen wird;
Erhalten (556) von Ergänzungsinformation (21), die den anrufenden Teilnehmer betrifft, am Unternehmensnetz; und
als Antwort auf das Empfangen (554) der Angabe auf dem Datenkanal, dass der Anruf angenommen wird, Senden (560) der Ergänzungsinformation an die mobile Vorrichtung (11) über den Datenkanal und zur Anzeige auf der mobilen Vorrichtung (11) während des Einrichtens eines Sprachkanals (97) zwischen einer Nebenstellenanlage (Private Branch eXchange , PBX) (4) und der mobilen Vorrichtung (11).

6. Verfahren nach Anspruch 5, wobei das Erhalten (560) von Ergänzungsinformation das Erhalten von Anwesenheitsinformation von einem Unternehmenstelefonienetz (26) umfasst, mit dem die PBX gekoppelt ist.

7. Verfahren nach Anspruch 5, wobei das Erhalten (560) von Ergänzungsinformation das Erhalten von Anwesenheitsinformation (26) von Unternehmenskommunikationsplattformen umfasst, die von E-Mail und Sofortnachrichtendienstservern einen oder mehrere umfassen.

8. Verfahren nach Anspruch 5, wobei das Erhalten (560) von Ergänzungsinformation das Erhalten von Verzeichnisinformation von einem Unternehmensverzeichnisserver (22) umfasst.

9. Verfahren nach Anspruch 5, wobei das Erhalten (560) von Ergänzungsinformation das Erhalten von Organisationsinformation (23) über einen Anrufer umfasst, der dem für die mobile Vorrichtung (11) verfügbaren Sprachanruf zugeordnet ist.

10. Verfahren nach Anspruch 5, wobei das Erhalten (26) von Ergänzungsinformation das Erhalten von Anruferereignisinformation umfasst, die Anrufe betrifft, die von einem Anrufer getätigt werden, der dem für die mobile Vorrichtung (11) verfügbaren Sprachanruf zugeordnet ist.

11. Verfahren nach Anspruch 5, wobei das Erhalten von Ergänzungsinformation das Erhalten von Information über die Identität eines Anrufers und das Durchsuchen von einer oder mehreren Datenbanken nach Information, die den Anrufer betrifft, umfasst.

12. Mobile Vorrichtung mit:
einer oder mehreren Drahtlosnetz-Schnittstellen (247, 260), die zu Paketdaten- und Sprachkommunikation imstande sind;
einem Speicher (241, 243);
einer Benutzerschnittstelle (210); und
einer Verarbeitungsressource (221), die mit dem Speicher, mit der einen oder den mehreren Drahtlosnetz-Schnittstellen (247, 260) und mit der Benutzerschnittstelle (210) gekoppelt ist, und
die dazu programmiert ist, in Paketdaten eine Angabe der Verfügbarkeit eines Sprachanrufs für die mobile Vorrichtung an einer Nebenstellenanlage (Private Branch eXchange, PBX) (4) zu empfangen, um reagierend die Angabe der Sprachanrufverfügbarkeit durch die Schnittstelle (210) auszugeben, um eine Angabe der Annahme des Sprachanrufs durch die Schnittstelle (210) zu empfangen, als Antwort auf die Angabe der Annahme die Herstellung eines Sprachkommunikationskanals auszulösen und die Ergänzungsinformation anzuzeigen, die in Paketdaten über die eine oder mehreren Drahtlosnetz-Schnittstellen während einer Zeit empfangen wird, wenn der Sprachkanal eingerichtet wird, um Audio für den angenommenen Sprachanruf zu tragen.

13. Mobile Vorrichtung nach Anspruch 12, wobei die Ergänzungsinformation eine oder mehrere Kontaktinformationen, die von einem Unternehmensverzeichnisserver (22) erhältlich sind, und Organisationsinformation (23), die die Identität eines Anrufers (25) betrifft, umfasst.

14. Mobile Vorrichtung nach Anspruch 12, wobei die Verarbeitungsressource weiterhin dazu programmiert ist, die Herstellung des Sprachkanals durch Signalisieren hin dazu programmiert ist, die Herstellung des Sprachkanals durch Signalisieren von einem oder mehreren Befehlen an eine Netzinfrastrukturausrüstung auszulösen.

## Revendications

1. Procédé mis en oeuvre sur un dispositif mobile (11), comprenant les étapes consistant à :
recevoir (502), sur le dispositif mobile (11), une indication de disponibilité d'un appel vocal sur un canal de données ;
produire l'indication de la disponibilité de l'appel vocal sur une interface du dispositif mobile (11) ;
recevoir (512, 61) sur le dispositif mobile (11) des informations supplémentaires concernant l'appel vocal sur le canal de données ;
recevoir (504, 506) une entrée sur l'interface du dispositif mobile (11) pour indiquer que l'appel vocal doit être accepté ;
commencer (508) l'établissement d'un canal vocal en réponse à l'acceptation de l'appel vocal ; et
pendant l'établissement du canal vocal, produire (514) des éléments des informations supplémentaires sur l'interface du dispositif mobile (11).

2. Procédé selon la revendication 1, dans lequel l'étape de réception des informations supplémentaires comprend l'étape consistant à recevoir une ou plusieurs informations de contacts disponibles auprès d'un serveur de répertoire d'entreprise (22), et des informations relatives à l'organisation (23) intéressant l'identité d'un appelant (25).

3. Procédé selon la revendication 1, dans lequel l'étape de commencement de l'établissement du canal vocal comprend l'étape consistant à envoyer une signalisation à un équipement d'infrastructure de réseau avec une ou plusieurs instructions.

4. Procédé selon la revendication 1, dans lequel l'étape de commencement de l'établissement du canal vocal comprend l'étape consistant à envoyer une signalisation (62) à un équipement d'infrastructure de réseau dans un réseau mobile public terrestre (50).

5. Procédé comprenant les étapes consistant à :
indiquer (552) à un dispositif mobile (11) à partir d'un réseau d'entreprise, sur un canal de données (91, 88), qu'un appel vocal provenant d'une partie appelante est disponible pour le dispositif mobile (11) ;
recevoir (554) sur le canal de données (91, 88) une indication que l'appel est accepté sur le dispositif mobile (11) ;
obtenir (556) sur le réseau d'entreprise des informations supplémentaires (21) intéressant la partie appelante ; et
en réponse à la réception (554) de l'indication de l'acceptation de l'appel sur le canal de données, envoyer (560) les informations supplémentaires au dispositif mobile (11) sur le canal de données, en vue d'un affichage sur le dispositif mobile (11), pendant l'établissement d'un canal vocal (97) entre un commutateur privé (4) et le dispositif mobile (11).

6. Procédé selon la revendication 5, dans lequel l'étape d'obtention (560) d'informations supplémentaires comprend l'étape consistant à obtenir des informations de présence auprès d'un réseau de téléphonie d'entreprise (26) avec lequel est couplé le commutateur privé.

7. Procédé selon la revendication 5, dans lequel l'étape d'obtention (560) d'informations supplémentaires comprend l'étape consistant à obtenir des informations de présence (26) auprès de plates-formes de communication d'entreprise comprenant l'un ou plusieurs de serveurs de courriel et de messagerie instantanée.

8. Procédé selon la revendication 5, dans lequel l'étape d'obtention (560) d'informations supplémentaires comprend l'étape consistant à obtenir des informations de répertoire auprès d'un serveur de répertoire d'entreprise (22).

9. Procédé selon la revendication 5, dans lequel l'étape d'obtention (560) d'informations supplémentaires comprend l'étape consistant à obtenir des informations relatives à l'organisation (23) d'un appelant associé à l'appel vocal disponible pour le dispositif mobile (11).

10. Procédé selon la revendication 5, dans lequel l'étape d'obtention (26) d'informations supplémentaires comprend l'étape consistant à obtenir des informations historiques sur l'appelant, intéressant des appels passés par l'appelant associé à l'appel vocal disponible pour le dispositif mobile (11).

11. Procédé selon la revendication 5, dans lequel l'étape d'obtention d'informations supplémentaires comprend les étapes consistant à obtenir des informations sur une identité d'un appelant et à interroger une ou plusieurs bases de données pour obtenir des informations intéressant l'appelant.

12. Dispositif mobile comprenant :
une ou plusieurs interfaces de réseau sans fil (247, 260) en mesure d'effectuer des communications de données et de voix en paquets ;
une mémoire (241, 243) ;
une interface utilisateur (210) ; et
une ressource de traitement (221) couplée avec la mémoire, avec lesdites une ou plusieurs interfaces de réseau sans fil (247, 260) et avec l'interface utilisateur (210), et
programmée pour recevoir une indication, sous la forme de données en paquets, de la disponibilité d'un appel vocal pour le dispositif mobile sur un commutateur privé (4), pour produire en réponse l'indication de la disponibilité de l'appel vocal sur l'interface (210), pour recevoir une indication de l'acceptation de l'appel vocal sur l'interface (210), pour lancer, en réponse à l'indication de l'acceptation, l'établissement d'un canal de communication vocale et pour afficher des informations supplémentaires reçues dans des données en paquets sur lesdites une ou plusieurs interfaces de réseau sans fil pendant que le canal vocal est mis en place afin de transporter les données audio pour l'appel vocal accepté.

13. Dispositif mobile selon la revendication 12, dans lequel les informations supplémentaires comprennent une ou plusieurs informations de contacts disponibles auprès d'un serveur de répertoire d'entreprise (22) et des informations relatives à l'organisation (23) intéressant l'identité d'un appelant (25).

14. Dispositif mobile selon la revendication 12, dans lequel la ressource de traitement est en outre programmée pour lancer l'établissement du canal vocal en envoyant une signalisation à un équipement d'infrastructure de réseau avec une ou plusieurs instructions.
